# EUROPÄISCHE PATENTSCHRIFT

(11) **EP 3 329 500 B1**
(45) Veröffentlichungstag und Bekanntmachung des Hinweises auf die Patenterteilung: **31.03.2021**
(21) Anmeldenummer: 16735653.4
(22) Anmeldetag: 05.07.2016
(51) Int. Cl.: H01B 17/58, H01B 17/30

(54) **EXPLOSIONSGESCHÜTZTE ANORDNUNG ZUR BOLZENDURCHFÜHRUNG UND VERFAHREN ZU DEREN HERSTELLUNG**
EXPLOSION-PROOF ARRANGEMENT FOR PASSAGE OF A BOLT AND METHOD FOR PRODUCING SAME
DISPOSITIF ANTIDÉFLAGRANT POUR TRAVERSÉE DE BOULON ET SON PROCÉDÉ DE FABRICATION

(30) Priorität: 28.07.2015 DE 102015112286
(43) Veröffentlichungstag der Anmeldung: 06.06.2018
(73) Patentinhaber: R. STAHL Schaltgeräte GmbH, 74638 Waldenburg (DE)
(72) Erfinder: KUTSCH, Maxim, 74081 Heilbronn (DE); ROLL, Fabian, 74547 Untermünkheim (DE)
(74) Vertreter: Rüger Abel Patentanwälte PartGmbB
(86) Internationale Anmeldenummer: PCT/EP2016/065818
(87) Internationale Veröffentlichungsnummer: WO 2017/016818

(56) Entgegenhaltungen:
- DE-A1- 1 933 459
- DE-A1-102012 105 113
- DE-A1-102012 111 270
- DE-B- 1 046 171
- DE-U- 1 788 882
- DE-U1- 8 913 154
- US-A- 2 433 911
- US-A- 3 605 076

## Beschreibung

Die Erfindung betrifft eine explosionsgeschützte Anordnung sowie ein Verfahren zu deren Herstellung. Die explosionsgeschützte Anordnung dient dazu, einen elektrischen Leiter aus einem explosionsgefährdeten Bereich durch eine Wand in einen explosionsgeschützten Bereich zu führen, wobei die Zünddurchschlagsicherheit im Bereich der Wand durch die Anordnung gewährleistet werden muss.

Solche Anordnungen sind in verschiedenen Ausführungen bekannt. DE 10 2012 111 270 A1 beschreibt eine Anordnung aus einer Kabelverbindungseinrichtung und einem mehradrigen Kabel. Die Kabelverbindungseinrichtung hat eine plastisch verformbare Außenhülse mit einem Krimpabschnitt sowie eine hohlzylindrische Innenhülse zwischen dem Kabel und der Außenhülse. Der Krimpabschnitt wird radial nach innen verformt, wodurch sich die elastische Innenhülse und die Kabelummantelung verformen. Dadurch können Zündspalte außerhalb der Kabelummantelung sowie zwischen den Adern innerhalb der Kabelummantelung geschlossen werden.

Das zünddurchschlagsichere Durchführen von Bolzen durch eine Wand stellt in der Praxis andere technische Herausforderungen als das zünddurchschlagsichere Durchführen von Leitungen oder Kabeln. Aus der Praxis sind Bolzenleitungsdurchführungen bekannt, z.B. die Baureihe 8171 der Stahl Schaltgeräte GmbH. Dort weist die explosionsgeschützte Anordnung einen Bolzen und einen hülsenförmigen Verbindungskörper auf, die koaxial zueinander angeordnet sind. Zur Verbindung des Bolzens mit dem Verbindungskörper und zur elektrischen Isolierung zwischen diesen beiden Teilen wird in einer Gussform aus einer Epoxidmasse ein rohrförmiges Zwischenstück gegossen, das sich einerseits mit der Umfangsfläche des Bolzens und andererseits mit der Mantelinnenfläche des hülsenförmigen Verbindungskörpers verbindet. Um eine dauerhaft haltende Verbindung zu erreichen, werden der Bolzen und der Verbindungskörper beschichtet, z.B. mit einem galvanischen Überzug und/oder mit einer Anderen bzw. weiteren Schicht versehen. In der Praxis hat sich gezeigt, dass an den Stellen, an denen die Epoxidharzmasse nicht ausreichend stoffschlüssig mit dem Bolzen oder dem Verbindungskörper verbunden ist, durch Nachhärtung des Epoxidharzes Mikrorisse entstehen können, durch die Wasser eindringen kann. In einigen Fällen besteht die explosionsgeschützte Anordnung die statische Druckprüfung nicht und entspricht somit nicht der erforderlichen Norm.

Bekannte explosionsgeschützte Anordnungen sind zum Beispiel in den Dokumenten DE 17 88 882 U, DE 89 13 154 U1 und DE 10 2012 105113 A1 beschrieben.

Ausgehend von dem bekannten Stand der Technik ist es eine Aufgabe der vorliegenden Erfindung, eine explosionsgeschützte Anordnung zur Durchführung eines elektrisch leitenden Bolzens zu schaffen, die sich einfach herstellen lässt und dennoch den Anforderungen der Norm gerecht wird.

Diese Aufgabe wird durch eine explosionsgeschützte Anordnung mit den Merkmalen des Patentanspruches 1 sowie ein Verfahren mit den Merkmalen des Patentanspruches 14 gelöst.

Zu der explosionsgeschützten Anordnung gehört ein sich entlang einer Längsachse in einer Längsrichtung erstreckender elektrisch leitfähiger Bolzen. Vorzugsweise kann er aus Metall oder einer Metalllegierung, beispielsweise aus Messing, Kupfer oder Aluminium bestehen und er kann integral ohne Naht- und Fügestelle ausgeführt sein. Der Bolzen hat eine sich um die Längsachse herum erstreckende Bolzenumfangsfläche mit mehreren Umfangsflächenabschnitten. Wenigstens einer der Umfangsflächenabschnitte erstreckt sich schräg oder radial zur Längsachse und bildet eine erste Anschlagfläche. Die erste Anschlagfläche kann beispielsweise eine Ringfläche sein, die sich in einer Ebene radial zur Längsachse erstreckt oder eine koaxial zur Längsachse angeordnete Konusmantelfläche. Es ist bevorzugt, wenn der Bolzen mehrere erste Anschlagflächen aufweist, die insbesondere Normalenvektoren aufweisen, die voneinander weg weisen.

Unmittelbar in Längsrichtung aneinander anschließende Umfangsflächenabschnitte haben Normalenvektoren, die in verschiedene Richtungen weisen.

Zu der Anordnung gehört außerdem eine elektrisch isolierende Hülse. Vorzugsweise besteht die Hülse aus einem elastisch radial verformbaren Material, beispielsweise einem Elastomer, Polyamid, Polytetrafluoräthylen oder einem anderen geeigneten Kunststoff. Unter einem elastischen Material der Hülse ist hierbei ein Material zu verstehen, das sich bei den auftretenden Umformkräften elastisch verformt. Demgegenüber ist der Bolzen bei den auftretenden Umformkräften unverformbar und kann daher als starrer Bolzen bezeichnet werden.

Die Hülse hat eine sich um die Längsachse ringförmig geschlossen erstreckende Hülseninnenfläche. Die Hülseninnenfläche liegt an der Bolzenumfangsfläche an. Die Hülseninnenfläche hat mehrere Innenflächenabschnitte, von denen sich wenigstens einer schräg oder radial zur Längsachse erstreckt und eine Gegenanschlagfläche bildet. Die wenigstens eine Gegenanschlagfläche ist als Gegenstück zur Anschlagfläche ausgeführt und kann daher ebenfalls als Ringfläche oder Konusmantelfläche ausgeführt sein. Die wenigstens eine erste Anschlagfläche und die jeweils zugeordnete wenigstens eine erste Gegenanschlagfläche liegen aneinander an. Es können auch mehrere Paare von jeweils einer ersten Anschlagfläche und einer zugeordneten ersten Gegenanschlagfläche vorhanden sein.

Unmittelbar in Längsrichtung aneinander anschließende Innenflächenabschnitte haben Normalenvektoren, die in verschiedene Richtungen weisen.

Die explosionsgeschützte Anordnung weist außerdem einen Verbindungskörper auf, der aus einem plastisch verformbaren Material besteht. Vorzugsweise besteht der Verbindungskörper aus einem Metall oder einer Metalllegierung und bei einem Ausführungsbeispiel aus Stahl. Der Verbindungskörper hat einen Verbindungsabschnitt, der zumindest einen Längsabschnitt der Hülse umschließt. Der Verbindungsabschnitt ist plastisch umgeformt und drückt durch diese Umformung radial nach innen gegen die Hülse. Durch die plastische Umformung des Verbindungsabschnitts wird eine kraftschlüssige Verbindung zwischen dem Verbindungskörper und der Hülse einerseits und zwischen der Hülse und dem Bolzen andererseits gebildet. Dadurch ist eine zündspaltfreie Anordnung des Bolzens mittels der Hülse und des Verbindungskörpers erreicht.

Die Hülse wird durch die Radialkraft, die aus der plastischen Umformung des Verbindungsabschnitts resultiert, flächig zwischen dem Verbindungsabschnitt und dem radial unnachgiebigen Bolzen geklemmt bzw. gequetscht. Dabei kann ein Materialfluss des Materials der Hülse stattfinden und die vorhandenen Spalte schließen oder derart verkleinern, dass die Zünddurchschlagsicherheit gewährleistet ist. Bei diesem kraftschlüssigen Klemmen der Hülse zwischen dem Verbindungsabschnitt und dem Bolzen wird durch das plastische Umformen des Verbindungsabschnitts deren Außendurchmesser höchstens um 15% und vorzugsweise höchstens um 10% verringert.

Eine oder mehrere Gegenanschlagsflächen können durch die plastische Verformung des umgebenden Verbindungskörpers entstehen.

Vorzugsweise ist eine stoffschlüssige Verbindung zwischen der Hülse und dem Bolzen und/oder zwischen der Hülse und dem Verbindungskörper nicht vorhanden. Optional ist es möglich, zusätzlich zu der kraftschlüssigen Quetschverbindung zwischen dem Verbindungsabschnitt und der Hülse und/oder zwischen der Hülse und dem Bolzen eine dünne Klebeschicht aufzubringen, die dünner ist als die Dicke der Hülse und vorzugsweise zumindest um den Faktor 10 bis 15 dünner ist als die Dicke der Hülse.

Dadurch, dass die erste Anschlagfläche und die erste Gegenanschlagfläche aneinander anliegen, wird eine Relativbewegung der Hülse gegenüber dem Bolzen zumindest in eine Richtung entlang der Längsachse verhindert. Sind jeweils mehrere erste Anschlagflächen und erste Gegenanschlagflächen vorhanden, kann die Hülse an dem Bolzen auch gegen eine Bewegung in beide Richtungen entlang der Längsachse gesichert werden.

Es ist bevorzugt, wenn die explosionsgeschützte Anordnung eine durch eine Durchführungsinnenfläche begrenzte Durchführungsöffnung in einer Wand oder einem Durchführungsteil aufweist. Die plastisch umgeformte Abschnittsaußenfläche des Verbindungsabschnitts des Verbindungskörpers bildet eine erste Begrenzungsfläche. Die Durchführungsinnenfläche der Durchführungsöffnung bildet eine zweite Begrenzungsfläche. Zwischen den beiden Begrenzungsflächen ist ein zünddurchschlagsicherer Ex-Spalt gebildet. Die erste Begrenzungsfläche kann nach dem plastischen Umformen des Verbindungsabschnitts auch durch eine zusätzliche mechanische Bearbeitung erzeugt werden, wie z.B. durch Schneiden eines Gewindes. Die zweite Begrenzungsfläche kann durch Gießen der Wand oder des Durchführungsteils oder auch durch eine zusätzliche mechanische Bearbeitung erzeugt werden, wie z.B. durch Bohren und/oder Schneiden eines Gewindes. Der Ex-Spalt kann entlang der Längsachse betrachtet als ebener Spalt durch ebene Begrenzungsflächen ohne Vorsprünge und Vertiefungen gebildet sein. Es ist alternativ auch möglich, dass der Ex-Spalt als Gewindespalt ausgebildet ist und an der ersten Begrenzungsfläche ein entsprechendes Außengewinde und an der zweiten Begrenzungsfläche ein zugeordnetes Innengewinde vorhanden ist.

Die wenigstens eine erste Gegenanschlagfläche kann vor dem plastischen Verformen des Verbindungsabschnitts vorhanden sein. Bei dieser Ausführung wird die erste Gegenanschlagfläche bereits beim Herstellen der Hülse erzeugt, bevor die kraftschlüssige Verbindung der Hülse mit dem Verbindungskörper bzw. dem Bolzen hergestellt wird. Alternativ oder zusätzlich kann wenigstens eine erste Gegenanschlagfläche durch und bei dem plastischen Verformen des Verbindungsabschnitts gebildet werden. Beispielsweise ist es vorteilhaft, wenn eine der ersten Gegenanschlagflächen bereits vor dem plastischen Verformen vorhanden ist und eine weitere erste Gegenanschlagfläche bei und durch das plastische Verformen des Verbindungsabschnitts gebildet wird. Durch diese Ausgestaltung kann eine Relativbewegungssicherung entlang der Längsachse in beide Richtungen auf einfache Weise erreicht werden.

Bei einem Ausführungsbeispiel ist eine erste Anschlagfläche an einer Ringstufe des Bolzens vorhanden. Die Ringstufe verbindet zwei zylindrische Umfangsflächenabschnitte der Bolzenumfangsfläche miteinander, die unterschiedliche Durchmesser aufweisen. Der Normalenvektor der Ringstufe kann parallel oder schräg zur Längsachse ausgerichtet sein.

Die Hülse weist vorzugsweise eine Hülsenaußenfläche auf, die an einer Durchgangsfläche eines den Verbindungskörper in Längsrichtung durchsetzenden Durchgangs anliegt. Der Durchgang ist vorzugsweise zumindest in dem Verbindungsabschnitt des Verbindungskörpers gebildet. Durch das plastische Verformen dieses Verbindungsabschnitts wird die Durchgangsfläche radial zur Längsachse gegen die Hülsenaußenfläche gedrückt.

Die Hülsenaußenfläche kann mehrere Außenflächenabschnitte aufweisen. Dabei kann wenigstens einer der Außenflächenabschnitte eine sich schräg oder radial zur Längsachse erstreckende zweite Anschlagfläche bilden. Es können auch mehrere zweite Anschlagflächen vorhanden sein. Unmittelbar in Längsrichtung aneinander anschließende Außenflächenabschnitte haben Normalenvektoren, die in verschiedene Richtungen weisen.

Es ist außerdem vorteilhaft, wenn die Durchgangsfläche mehrere Durchgangsflächenabschnitte aufweist. Wenigstens einer der Durchgangsflächenabschnitte kann dabei eine sich schräg oder radial zur Längsachse erstreckende zweite Gegenanschlagfläche bilden, die an der zweiten Anschlagfläche anliegt. Es können auch mehrere Paare von jeweils einer zweiten Anschlagfläche und einer zugeordneten zweiten Gegenanschlagfläche vorhanden sein. Durch die wenigstens eine zweite Anschlagfläche und die wenigstens eine zweite Gegenanschlagfläche kann eine Relativbewegungssicherung des Verbindungskörpers gegenüber der Hülse in Längsrichtung erreicht werden.

Die wenigstens eine zweite Anschlagfläche und/oder die wenigstens eine zweite Gegenanschlagfläche können beim und durch das plastische Verformen des Verbindungsabschnitts gebildet sein. Zusätzlich oder alternativ ist es auch möglich, dass wenigstens eine zweite Anschlagfläche und/oder wenigstens eine zweite Gegenanschlagfläche bereits vor dem plastischen Verformen des Verbindungsabschnitts vorhanden ist.

Es ist ferner vorteilhaft, wenn die Hülse eine Hülsenaußenfläche mit einem Außenflächenabschnitt aufweist, der eine Oberflächenprofilierung aufweist. Zusätzlich oder alternativ kann der Verbindungskörper an seiner den Durchgang begrenzenden Durchgangsfläche einen Durchgangsflächenabschnitt mit einer Oberflächenprofilierung aufweisen.

Die Tiefe der Oberflächenprofilierung ist gering und vorzugsweise kleiner als 1,0 mm oder kleiner als 0,5 mm. Die Oberflächenprofilierung kann beispielsweise durch eine Rändelung gebildet sein. Es ist vorteilhaft, wenn durch die Oberflächenprofilierung zumindest abschnittsweise Profilvertiefungen bzw. Profilvorsprünge gebildet werden, die sich in Längsrichtung erstrecken. Dadurch kann beim Umformen des Verbindungsabschnitts zusätzlich zu der kraftschlüssigen Verbindung auch eine formschlüssige Verbindung hergestellt werden, die eine Drehsicherung des Verbindungskörpers relativ zur Hülse um die Längsachse bereitstellt.

Eine explosionsgeschützte Anordnung, wie sie vorstehend beschrieben ist, kann durch ein erfindungsgemäßes Verfahren mit den folgenden Schritten hergestellt werden:
Zunächst wird der elektrisch leitende Bolzen bereitgestellt. Er weist die erste Anschlagfläche auf. Außerdem wird die elektrisch isolierende Hülse sowie der plastisch verformbare Verbindungskörper bereitgestellt.

Die Hülse wird auf den Bolzen aufgesteckt und der Verbindungskörper wird wiederum auf die Hülse aufgesteckt, so dass die Hülse zwischen dem Verbindungsabschnitt des Verbindungskörpers und der Bolzenumfangsfläche angeordnet ist. Wenn die Hülse bereits die erste Gegenanschlagfläche aufweist, werden die Hülse und der Bolzen derart relativ zueinander angeordnet, dass die erste Anschlagfläche und die erste Gegenanschlagfläche aneinander anliegen.

Entsprechend wird der Verbindungskörper derart auf die Hülse aufgesteckt, dass die zweite Anschlagfläche und die zweite Gegenanschlagfläche aneinander anliegen, sofern die beiden zweiten Flächen bereits vor der plastischen Umformung vorhanden sind. Dadurch kann die Relativposition zwischen dem Verbindungskörper und der Hülse vorgegeben werden.

Anschließend wird der Verbindungsabschnitt des Verbindungskörpers plastisch umgeformt. Dabei verringert sich die Querschnittsfläche der Außenkontur im Verbindungsabschnitt. Der Verbindungsabschnitt drückt radial nach innen gegen die Hülse und erzeugt dadurch eine kraftschlüssige Verbindung zwischen dem Verbindungskörper und der Hülse einerseits sowie zwischen der Hülse und dem Bolzen andererseits. Die Bolzenumfangsfläche liegt dabei an der Hülseninnenfläche an. Wenn die Hülse vor dem plastischen Verformen keine erste Gegenanschlagfläche aufweist, wird die erste Gegenanschlagfläche durch das plastische Verformen ausgebildet und legt sich an die erste Anschlagfläche des Bolzens an. Es ist auch möglich, dass die Hülse bereits vor dem plastischen Verformen eine erste Gegenanschlagfläche aufweist und durch das plastische Verformen eine weitere erste Gegenanschlagfläche gebildet wird, die an einer entsprechend zugeordneten ersten Anschlagfläche des Bolzens anliegt.

Das Verfahren lässt sich einfach und schnell ausführen. Eine stoffschlüssige Verbindung zwischen dem Bolzen und der Hülse bzw. zwischen der Hülse und dem Verbindungskörper kann optional vorhanden sein, ist aber nicht erforderlich. Die gebildete Baueinheit aus Bolzen, Hülse und Verbindungskörper besteht vorzugsweise nur aus diesen drei Teilen. Gießprozesse, zur stoffschlüssigen Verbindung des Bolzens mit dem Verbindungskörper entfallen.

Es ist bevorzugt, dass das plastische Umformen des Verbindungsabschnitts zumindest an einer Abschnittsfläche des Verbindungsabschnitts eine erste Begrenzungsfläche bildet. Diese erste Begrenzungsfläche kann mit einer eine Durchführungsöffnung begrenzenden zweiten Begrenzungsfläche einen zünddurchschlagsicheren Ex-Spalt bilden. Dieser kann als in Längsrichtung gesehen ebener Spalt oder als Gewindespalt ausgeführt sein, wie es vorstehend erläutert wurde.

Bei einem bevorzugten Verfahren erfolgt das plastische Umformen des Verbindungskörpers bzw. des Verbindungsabschnitts durch Rollen des Verbindungskörpers bzw. des Verbindungsabschnitts zwischen zwei Walzwerkzeugen. Als Walzwerkzeuge können Umformplatten oder Umformwalzen dienen. Durch das Rollen ist es auf einfache Weise möglich, an der Abschnittsaußenfläche des Verbindungsabschnitts je nach Bedarf eine zylindrische Fläche koaxial zur Längsachse auszubilden oder ein Außengewinde zu formen, je nach dem ob der Ex-Spalt als entlang der Längsachse ebener Spalt oder als Gewindespalt ausgeführt werden soll.

Vorteilhafte Ausführungen der Anordnung bzw. des Verfahrens ergeben sich aus den abhängigen Patentansprüchen, der Beschreibung und der Zeichnungen. Nachfolgend werden bevorzugte Ausführungsbeispiele der Erfindung anhand der beigefügten Zeichnungen im Einzelnen erläutert. Es zeigen:
Fig. 1 eine schematische perspektivische Prinzipdarstellung eines explosionsgeschützten Gehäuses mit einer explosionsgeschützten Anordnung,
Fig. 2 das Ausführungsbeispiel der explosionsgeschützten Anordnung aus Fig. 1 in einer schematischen Seitenansicht,
Fig. 3 einen Bolzen sowie eine Hülse eines Ausführungsbeispiels einer explosionsgeschützten Anordnung in einer schematischen Längsschnittansicht,
Fig. 4 ein Ausführungsbeispiel einer explosionsgeschützten Anordnung mit dem Bolzen und der Hülse gemäß Fig. 3 in einer schematischen Längsschnittansicht,
Fig. 5 die explosionsgeschützte Anordnung aus Fig. 4 vor einem plastischen Umformen eines Verbindungsabschnitts eines Verbindungskörpers in schematischer Längsschnittansicht,
Fig. 6 die explosionsgeschützte Anordnung aus Fig. 5 in einer Ansicht entlang einer Längsachse gemäß Pfeil VI in Fig. 5,
Fig. 7 eine Ausführungsform zur Durchführung des plastischen Umformens des Verbindungsabschnitts in einer schematischen Prinzipdarstellung,
Fig. 8 die explosionsgeschützte Anordnung gemäß der Fig. 4-6 in einer schematischen Längsschnittansicht nach dem plastischen Umformen des Verbindungsabschnitts,
Fig. 9 ein weiteres Ausführungsbeispiel einer explosionsgeschützten Anordnung in einer schematischen Längsschnittansicht vor dem plastischen Umformen des Verbindungsabschnitts,
Fig. 10 das Ausführungsbeispiel aus Fig. 9 in einer schematischen Längsschnittansicht nach dem plastischen Umformen des Verbindungsabschnitts,
Fig. 11 ein weiteres Ausführungsbeispiel eines Verbindungskörpers in schematischer Längsschnittansicht und
Fig. 12 ein weiteres Ausführungsbeispiel einer Hülse in schematischer Längsschnittansicht.

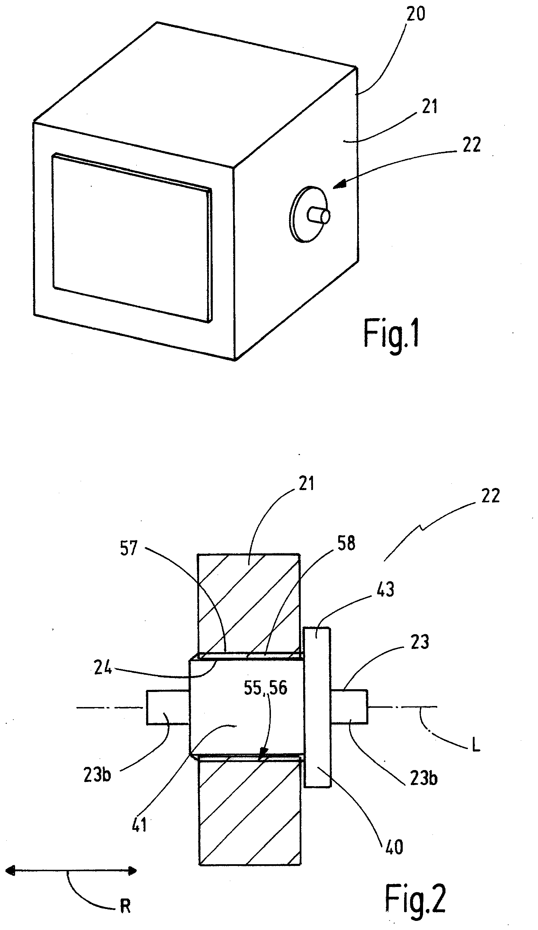

In Fig. 1 ist stark schematisiert ein explosionsgeschütztes Gehäuse 20 veranschaulicht. Das explosionsgeschützte Gehäuse 20 kann beispielsweise in der Form einer druckfesten Kapselung (Ex-d) ausgeführt sein. In einer Wand 21 des Gehäuses 20 ist eine explosionsgeschützte Anordnung vorhanden, mittels der ein elektrisch leitfähiger Bolzen 23 durch eine Durchführungsöffnung 24 in der Wand 21 hindurch geführt ist.

Der Bolzen 23 ist elektrisch leitfähig und besteht vorzugsweise aus Metall oder einer Metalllegierung, beispielsweise aus Messing, Kupfer oder Aluminium. Der Bolzen erstreckt sich entlang einer Längsachse L und ist vorzugsweise rotationssymmetrisch ausgeführt. Der Bolzen 23 ist als massiver Körper ohne Hohlräume ausgeführt und beispielsgemäß einstückig ohne Naht- und Fügestelle.

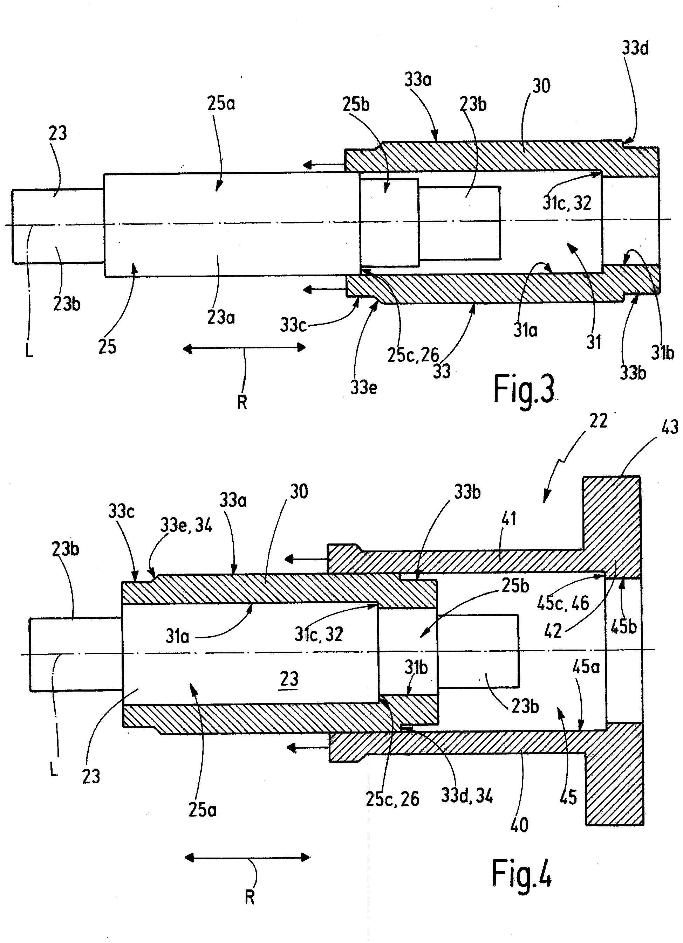

In den Fig. 3-8 ist ein erstes Ausführungsbeispiel eines Bolzens 23 der explosionsgeschützten Anordnung 22 veranschaulicht. Der Bolzen 23 hat eine die Längsachse L ringförmig geschlossen umgebende Bolzenumfangsfläche 25 mit mehreren Umfangsflächenabschnitten. Die sich in einer Längsrichtung R parallel zu der Längsachse L unmittelbar aneinander anschließende Umfangsflächenabschnitte haben Normalenvektoren, die in verschiedene Richtungen weisen. Bei dem hier gezeigten Ausführungsbeispiel sind an einem Zentralabschnitt 23a des Bolzens zumindest ein erster Umfangsflächenabschnitt 25a, ein zweiter Umfangsflächenabschnitt 25b und ein dritter Umfangsflächenabschnitt 25c vorhanden. Es können, wie in der Zeichnung veranschaulicht, auch weitere Umfangsflächenabschnitte vorhanden sein.

Der erste Umfangsflächenabschnitt 25a und der zweite Umfangsflächenabschnitt 25b sind jeweils durch eine Zylindermantelfläche und beispielsgemäß durch eine Kreiszylindermantelfläche gebildet, die koaxial zur Längsachse L angeordnet sind. Die Durchmesser des ersten Umfangsflächenabschnitts 25a und des zweiten Umfangsflächenabschnitts 25b sind unterschiedlich groß und beispielsgemäß ist der Durchmesser des zweiten Umfangsflächenabschnitts 25b kleiner. Dadurch ist im Übergang zwischen dem ersten und dem zweiten Umfangsflächenabschnitt 25a, 25b eine Ringstufe gebildet, an der der dritte Umfangsflächenabschnitt 25c vorhanden ist. Der dritte Umfangsflächenabschnitt 25c umschließt die Längsachse L ringförmig koaxial und kann dabei als ebene Ringfläche rechtwinklig zur Längsachse L ausgerichtet sein (Fig. 3-5 und 8) oder alternativ hierzu als Kegelstumpfmantelfläche verlaufen.

Der dritte Umfangsflächenabschnitt 25c bildet eine erste Anschlagfläche 26.

An den Zentralabschnitt 23a des Bolzens 23 kann sich in Längsrichtung R auf beiden Seiten jeweils ein Endabschnitt 23b anschließen, wodurch weitere Umfangsflächenabschnitte gebildet sein können.

Zu der explosionsgeschützten Anordnung 22 gehört außerdem eine Hülse 30. In Längsrichtung R hat die Hülse 30 eine Länge, die der Länge des Zentralabschnitts 23a des Bolzens 23 entspricht. Die Hülse 30 hat eine Hülseninnenfläche 31, die in etwa an die Bolzenumfangsfläche 23 bzw. die im Zentralabschnitt 23a vorhandenen Umfangsflächenabschnitte 25a, 25b und 25c angepasst ist. Dementsprechend hat die Hülseninnenfläche 31 beim Ausführungsbeispiel mehrere und beispielsgemäß zumindest drei Innenflächenabschnitte. Die sich in Längsrichtung R unmittelbar aneinander anschließende Innenflächenabschnitte haben Normalenvektoren, die in verschiedene Richtungen weisen.

Beispielsgemäß sind ein erster Innenflächenabschnitt 31a, ein zweiter Innenflächenabschnitt 31b und ein dritter Innenflächenabschnitt 31c vorhanden. Der erste und der zweite Innenflächenabschnitt 31a, 31b haben die Form einer Zylindermantelfläche und beispielsgemäß einer Kreiszylindermantelfläche und umgeben die Längsachse L koaxial. Der Durchmesser des ersten Innenflächenabschnitts 31a ist an den Durchmesser des ersten Umfangsflächenabschnitts 25a angepasst und beispielsgemäß etwas größer. Analog hierzu ist der Durchmesser des zweiten Innenflächenabschnitts 31b an den Durchmesser des zweiten Umfangsflächenabschnitts 25b angepasst und beispielsgemäß etwas größer. Der erste und der zweite Innenflächenabschnitt 31a, 31b werden durch den dritten Innenflächenabschnitt 31c verbunden, der entsprechend dem dritten Umfangsflächenabschnitt 25c als Kreisringfläche radial zur Längsachse L ausgerichtet ist oder eine Kegelstumpfmantelfläche bildet. Der dritte Innenflächenabschnitt 31c bildet eine erste Gegenanschlagfläche 32, die mit der ersten Anschlagfläche 26 des Bolzens 23 zusammenarbeitet.

Die Hülse 30 hat eine Hülsenaußenfläche 33 mit mehreren Außenflächenabschnitten. Bei dem hier beschriebenen Ausführungsbeispiel sind fünf Außenflächenabschnitte 33a, 33b, 33c, 33d und 33e vorhanden. Die sich in Längsrichtung R unmittelbar aneinander anschließende Außenflächenabschnitte haben Normalenvektoren, die in verschiedene Richtungen weisen.

Bei dem beschriebenen Ausführungsbeispiel gemäß der Figuren 3, 4 und 8-10 sind der erste Außenflächenabschnitt 33a, der zweite Außenflächenabschnitt 33b sowie der dritte Außenflächenabschnitt 33c jeweils durch Zylindermantelflächen und beispielsgemäß Kreiszylindermantelflächen gebildet, wobei der erste Außenflächenabschnitt 33a einen anderen Durchmesser aufweist als der zweite und der dritte Außenflächenabschnitt 33b, 33c. Der erste Außenflächenabschnitt 33a ist zwischen dem zweiten und dem dritten Außenflächenabschnitt 33b, 33c angeordnet und über einen vierten Außenflächenabschnitt 33d mit dem zweiten Außenflächenabschnitt 33b bzw. über einen fünften Außenflächenabschnitt 33e mit dem dritten Außenflächenabschnitt 33c verbunden. Beim Ausführungsbeispiel ist der vierte Außenflächenabschnitt 33d in einer Ebene radial zur Längsachse L angeordnet. Der fünfte Außenflächenabschnitt 33e hat die Form einer Kegelstumpfmantelfläche. Die Länge des ersten Außenflächenabschnitts 33a in Längsrichtung R parallel zur Längsachse L ist wesentlich größer und beispielsgemäß um den Faktor von wenigstens 3 bis 4 größer als die Länge des zweiten Außenflächenabschnitts 33b und/oder des dritten Außenflächenabschnitts 33c. Der zweite Außenflächenabschnitt 33b umschließt den zweiten Innenflächenabschnitt 31b zumindest abschnittsweise und ist beispielsgemäß in Längsrichtung R kürzer als der zweite Innenflächenabschnitt 31b.

Der vierte Außenflächenabschnitt 33d und beispielsgemäß der zusätzliche fünfte Außenflächenabschnitt 33e bilden jeweils eine zweite Anschlagfläche 34.

Die Hülse 30 besteht aus elastisch verformbarem Material. Hierunter wird Material verstanden, das sich bei den auftretenden Umformkräften elastisch verformt. Als Material für die Hülse 30 kann ein Kunststoff verwendet werden, beispielsweise ein Elastomer, Polyamid oder Polytetrafluoräthylen.

Zu der explosionsgeschützten Anordnung 22 gehört außerdem ein Verbindungskörper 40. Der Verbindungskörper 40 hat einen rohr- oder hülsenförmigen Verbindungsabschnitt 41. Zusätzlich zu dem Verbindungsabschnitt 41 können optional weitere Abschnitte vorhanden sein. Beispielsgemäß weist der Verbindungskörper 40 einen Flanschabschnitt 42 mit einem Ringflansch 43 auf, der radial zur Längsachse L über den Verbindungsabschnitt 41 hinausragt.

Der Verbindungsabschnitt 41 und beispielsgemäß auch der Flanschabschnitt 42 werden von einem sich in Längsrichtung L erstreckenden Durchgang 44 durchsetzt. Der Durchgang 44 ist in Umfangsrichtung um die Längsachse L von einer Durchgangsfläche 45 begrenzt, die mehrere und beim Ausführungsbeispiel wenigstens drei Durchgangsflächenabschnitte aufweist: einen ersten Durchgangsflächenabschnitt 45a, einen zweiten Durchgangsflächenabschnitt 45b und einen den ersten und den zweiten Durchgangsflächenabschnitt 45a, 45b verbindenden dritten Durchgangsflächenabschnitt 45c. Die sich in Längsrichtung R unmittelbar aneinander anschließende Durchgangsflächenabschnitte haben Normalenvektoren, die in verschiedene Richtungen weisen.

Der erste und der zweite Durchgangsflächenabschnitt 45a, 45b sind jeweils durch Zylindermantelflächen und beispielsgemäß Kreiszylindermantelflächen gebildet und umgeben die Längsachse L koaxial. Der erste Durchgangsflächenabschnitt 45a hat einen größeren Durchmesser als der zweite Durchgangsflächenabschnitt 45b. An der dazwischen gebildeten Ringstufe ist der dritte Durchgangsflächenabschnitt 45c vorhanden, der als Kreisringfläche in einer Ebene radial zur Längsachse L angeordnet ist. Alternativ hierzu könnte der dritte Durchgangsflächenabschnitt 45c als auch Kegelstumpfmantelfläche ausgeführt sein. Er ist insbesondere an den vierten Außenflächenabschnitt 33d bzw. die davon gebildete zweite Anschlagfläche 34 angepasst. Der dritte Durchgangsflächenabschnitt 45c bildet eine zweite Gegenanschlagfläche 46.

Der Innendurchmesser des ersten Durchgangsflächenabschnitts 45a ist an den Außendurchmesser des ersten Außenflächenabschnitts 33a angepasst und beispielsgemäß etwas größer. Entsprechend ist der Innendurchmesser des zweiten Durchgangsflächenabschnitts 45b an den Außendurchmesser des zweiten Außenflächenabschnitts 33b angepasst und beispielsgemäß etwas größer. Die Länge in Längsrichtung R des ersten Durchgangsflächenabschnitts 45a entspricht der Gesamtlänge in Längsrichtung R des ersten Außenflächenabschnitts 33a, des dritten Außenflächenabschnitts 33c und des fünften Außenflächenabschnitts 33e. Die Länge des zweiten Durchgangsflächenabschnitts 45b in Längsrichtung R entspricht der Länge des zweiten Außenflächenabschnitts 33b. Beim Ausführungsbeispiel ist die Gesamtlänge in Längsrichtung R des Verbindungskörpers 40 genauso groß wie die Gesamtlänge der Hülse 30.

An einem verstärkten Bereich 41a des Verbindungsabschnitts 41 des Verbindungskörpers 40, der koaxial zu dem dritten Außenflächenabschnitt 33c und dem fünften Außenflächenabschnitt 33e der Hülse 30 angeordnet ist, ist die Dicke des Verbindungsabschnitts 41 vergrößert. Im Übrigen hat der Verbindungsabschnitt 41 beim Ausführungsbeispiel eine hohlzylindrische Ausgangsform vor dem plastischen Umformen des Verbindungsabschnitts 41. Die Vergrößerung der Dicke am verstärkten Bereich 41a des Verbindungsabschnitts 41 - beispielsgemäß an einem axialen Ende auf der dem Ringflansch 43 entgegengesetzten Axialseite - kann der Differenz zwischen den Radien des ersten Außenflächenabschnitts 33a und des dritten Außenflächenabschnitts 33c entsprechen.

In den Fig. 3-8 ist die schrittweise Montage bzw. Herstellung der explosionsgeschützten Anordnung 22 veranschaulicht.

Zunächst wird die Hülse 30 auf den Bolzen 23 in Radialrichtung R aufgesteckt, so dass der erste Innenflächenabschnitt 31a der Hülse 30 den ersten Umfangsflächenabschnitt 23a des Bolzens umschließt und der zweite Innenflächenabschnitt 31b der Hülse 30 den zweiten Umfangsflächenabschnitt 23b des Bolzens 23 umschließt. Dabei gelangt die erste Gegenanschlagfläche 32 der Hülse in Anlage mit der Anschlagfläche 26 am Bolzen 23. Dadurch ist die axiale Relativposition der Hülse 30 gegenüber dem Bolzen 23 definiert.

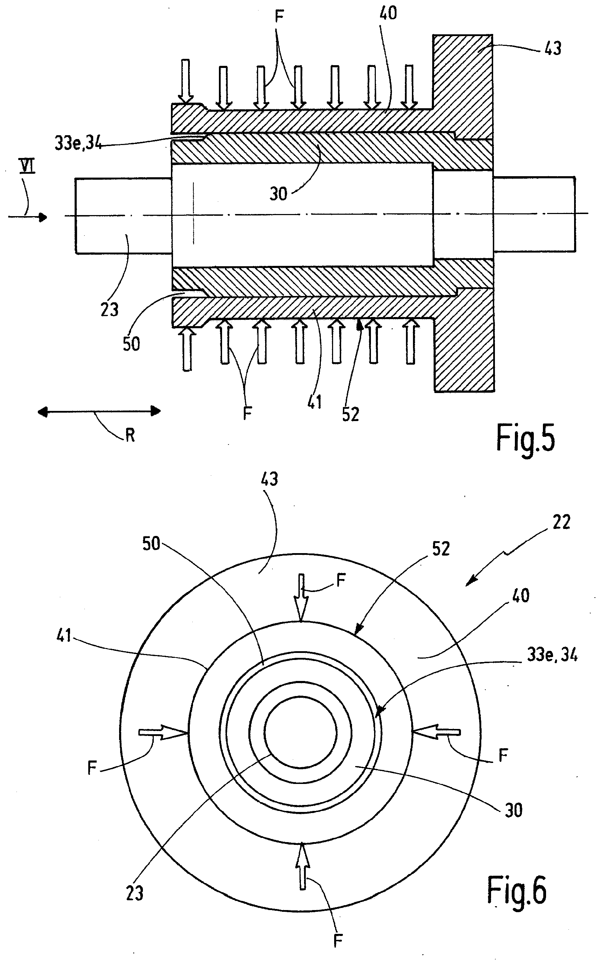

Außerdem wird der Verbindungskörper 40 mit seinem dem Ringflansch 43 entgegengesetzten Ende auf die Hülse 30 aufgesteckt, so dass der erste Durchgangsflächenabschnitt 45a den ersten Außenflächenabschnitt 33a, den dritten Außenflächenabschnitt 33c und den fünften Außenflächenabschnitt 33e der Hülse 30 umschließt. Der zweite Durchgangsflächenabschnitt 45b umschließt den zweiten Außenflächenabschnitt 33b der Hülse 30. Die an der Innenseite des Verbindungskörpers 40 gebildete zweite Gegenanschlagfläche 46 gelangt in Anlage mit der zweiten Anschlagfläche 34 an der Umfangsseite der Hülse 30. Dadurch ist auch die axiale Relativposition in Längsrichtung R zwischen der Hülse 30 und dem Verbindungskörper 40 definiert. Diese Situation ist in Fig. 5 veranschaulicht.

In den Fig. 5 und 6 ist schematisch durch Blockpfeile dargestellt, dass von außen auf den Verbindungsabschnitt 41 eine mechanische Umformkraft F ausgeübt wird, um den Verbindungsabschnitt 41 plastisch umzuformen. Dabei nimmt die Außenabmessung des Verbindungsabschnitts 41 ab und er wird radial nach innen gegen die Hülse 30 gedrückt, die sich wiederum auf dem Zentralabschnitt 23a des Bolzens 23 abstützt. Durch dieses plastische Umformen mit Hilfe der Umformkraft F wird eine kraftschlüssige Verbindung zwischen dem Verbindungskörper 40, der Hülse 30 und dem Bolzen 23 geschaffen.

Zusätzlich zu dieser kraftschlüssigen Verbindung kann auch durch das plastische Umformen eine formschlüssige Verbindung zwischen wenigstens zwei der drei Bestandteile (Verbindungskörper 40, Hülse 30, Bolzen 23) geschaffen werden. In Fig. 5 ist zu erkennen, dass vor dem plastischen Umformen des Verbindungsabschnitts 41 ein Umfangsspalt bzw. Ringspalt 50 zwischen der Hülse 30 und genauer dem dritten Außenflächenabschnitt 33c und dem ersten Durchgangsflächenabschnitt 45a besteht. Durch das plastische Umformen wird der beispielsgemäß verstärkte Bereich 41a des Verbindungsabschnitts 41 radial nach innen gedrückt, bis der Umfangs- bzw. Ringspalt 50 geschlossen ist. Dabei entsteht an dem Verbindungsabschnitt 41 des Verbindungskörpers 40 eine zweite Gegenanschlagfläche 46, die sich an die zweite Anschlagfläche 34 andrückt, die durch den fünften Außenflächenabschnitt 33e der Hülse 30 gebildet ist.

Es ist somit vorgesehen, dass durch das plastische Umformen des Verbindungsabschnitts 41 eine weitere zweite Gegenanschlagfläche 46 erzeugt wird, während eine andere zweite Gegenanschlagfläche 46 bereits vor der plastischen Umformung vorhanden ist und beispielsgemäß durch den dritten Durchführungsflächenabschnitt 45c gebildet ist.

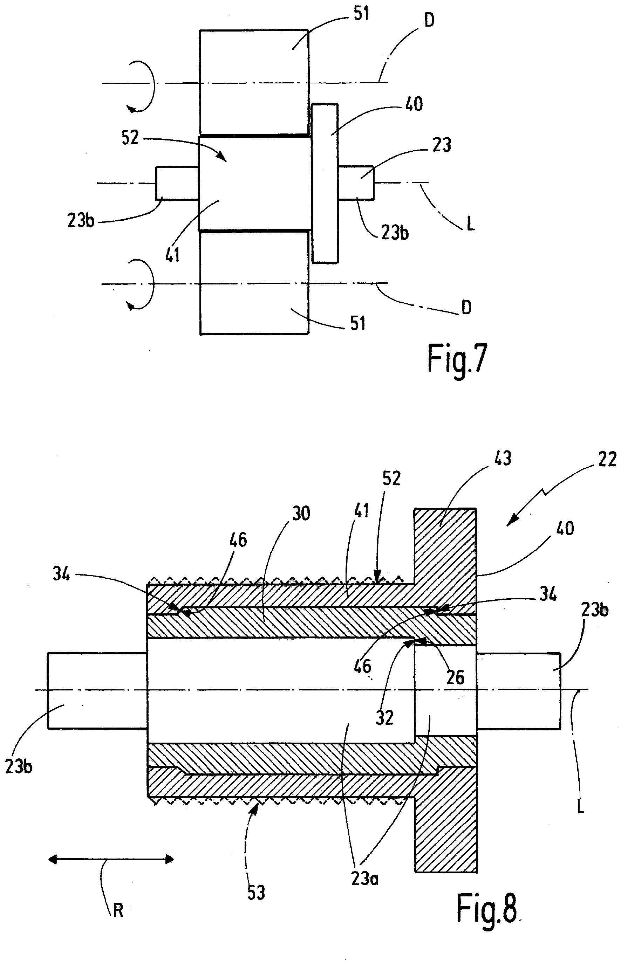

Das plastische Umformen des Verbindungsabschnitts 41 des Verbindungskörpers 40 kann - wie schematisch in Fig. 7 veranschaulicht - durch das Walzen des Verbindungsabschnitts 41 zwischen zwei Walzwerkzeugen 51 durchgeführt werden. Als Walzwerkzeuge 51 sind in Fig. 7 beispielhaft Walzen veranschaulicht, die sich um eine jeweilige Drehachse D drehen. Die Drehachsen D sind dabei parallel zur Längsachse L angeordnet. Durch den Abstand der beiden Drehachsen D kann der Umformgrad des Verbindungsabschnitts 41 vorgegeben werden. Alternativ zu der Verwendung von Walzen, könnte der Verbindungsabschnitt 41 auch zwischen zwei plattenförmigen Walzwerkzeugen gewalzt werden, deren Abstand den Umformgrad vorgibt und die sich in paralleler Ausrichtung relativ zueinander bewegen, so dass der Verbindungsabschnitt 41 zwischen den plattenförmigen Walzwerkzeugen abrollt.

In Fig. 8 ist schematisch die explosionsgeschützte Anordnung 22 nach der plastischen Umformung des Verbindungsabschnitts 41 veranschaulicht. Der Bolzen 23, die Hülse 30 und der Verbindungskörper 40 sind zünddurschlagspaltfrei kraftschlüssig und zumindest teilweise auch formschlüssig miteinander verbunden.

Eine plastisch umgeformte Abschnittsaußenfläche 52 des Verbindungsabschnitts 41 kann durch eine Zylindermantelfläche ohne Vorsprünge und Vertiefungen und sozusagen als ebene Fläche ausgeführt sein. Es ist alternativ hierzu auch möglich, durch die Walzwerkzeuge 51 eine Oberflächenprofilierung einzubringen oder - wie schematisch und gestrichelt in Fig. 8 veranschaulicht - ein Außengewinde 53 auszubilden.

Die plastisch umgeformte Außenabschnittsfläche 52 des Verbindungsabschnitts 41 stellt eine erste Begrenzungsfläche 54 dar. Die Baueinheit aus dem Verbindungskörper 40, der Hülse 30 sowie dem Bolzen 23 wird in der Durchführungsöffnung 24 angeordnet. Die die Durchführung 24 in Umfangsrichtung um die Längsachse L begrenzende Durchführungsinnenfläche 55 bildet eine zweite Begrenzungsfläche 56. An der zweiten Begrenzungsfläche 56 kann ein Innengewinde 57 ausgebildet sein (Fig. 2). Die erste Begrenzungsfläche 54 am Verbindungskörper 40 und die zweite Begrenzungsfläche 56 in der Durchführungsöffnung 24 bilden gemeinsam einen zünddurchschlagsicheren Ex-Spalt 58.

Wie schematisch in Fig. 2 dargestellt, kann der Ex-Spalt 58 durch einen Gewindespalt gebildet sein, wenn an der ersten Begrenzungsfläche 54 ein Außengewinde 53 und an der zweiten Begrenzungsfläche 56 ein Innengewinde 57 vorgesehen ist. Die beiden Begrenzungsflächen 54, 56 können auch als Zylindermantelflächen ausgeführt sein, so dass der Ex-Spalt 58 durch einen Ringspalt zwischen den beiden Begrenzungsflächen gebildet ist.

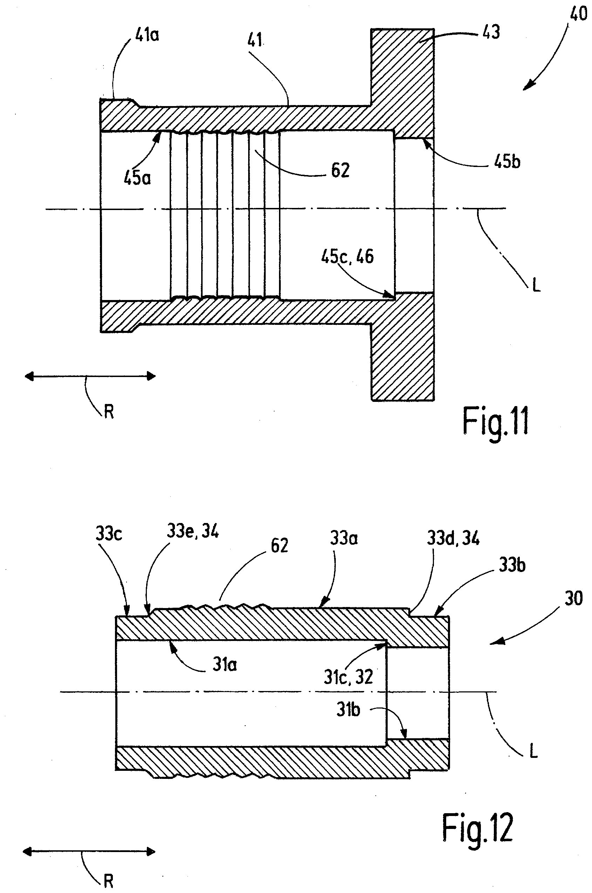

In den Fig. 11 und 12 ist ein abgewandeltes Ausführungsbeispiel für den Verbindungskörper 40 bzw. die Hülse 30 veranschaulicht. An einem Außenflächenabschnitt und beispielsgemäß am ersten Außenflächenabschnitt 33a kann eine Oberflächenprofilierung 62 eingebracht sein. Zusätzlich oder alternativ ist es auch möglich, eine Oberflächenprofilierung 62 in einen Durchgangsflächenabschnitt und beispielsgemäß den ersten Durchgangsflächenabschnitt 45a einzubringen. Es sei darauf hingewiesen, dass die in den Fig. 11 und 12 dargestellten Oberflächenprofilierungen 62 nicht maßstabsgetreu sind und lediglich der Deutlichkeit halber im Verhältnis zu den Anschlagflächen bzw. Gegenanschlagflächen vergrößert dargestellt wurden. Die Oberflächenprofilierung 62 ist vorzugsweise durch eine Rändelung oder dergleichen gebildet. Ihre Tiefe beträgt höchstens 1,0 mm und vorzugsweise weniger als 0,5 mm. Die Oberflächenprofilierung 62 kann eine beliebige Form haben und beispielsweise durch noppen- und/oder zackenförmige Vorsprünge und/oder Vertiefungen gebildet sein.

Beim plastischen Verformen des Verbindungsabschnitts 41 kann durch eine Oberflächenprofilierung 62 zusätzlich zu dem entstehenden Kraftschluss auch ein formschlüssiges Ineinandergreifen zwischen der Hülse 30 und dem Verbindungskörper 40 erreicht werden. Abhängig von der Form der Profilierung ist es dabei auch möglich, eine formschlüssige Drehsicherung zu erzeugen, die eine Relativverdrehung zwischen dem Verbindungskörper 40 und der Hülse 30 bei den üblicherweise auftretenden Kräften verhindert. Dazu könnten beispielsweise parallel zur Längsachse L oder zumindest schräg zur Umfangsrichtung um die Längsachse L verlaufende Vertiefungen eingebracht werden. Wie bei einer Rändelung können solche Vertiefungen auch in sich kreuzenden Richtungen eingebracht werden.

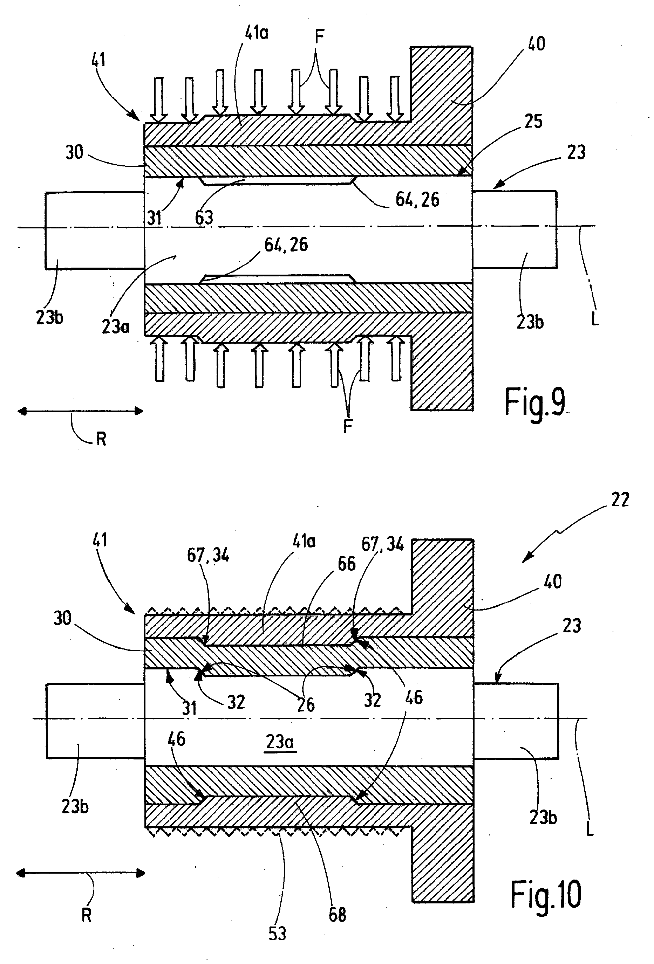

In den Fig. 9 und 10 ist eine alternative Ausführungsform der explosionsgeschützten Anordnung 22 veranschaulicht. Der Bolzen hat bei diesem Ausführungsbeispiel einen zentralabschnitt 23a mit einer zylindrischen Kontur, die in einem Bereich durch eine Umfangsnut 63 verjüngt ist. Dadurch ist der Durchmesser des Zentralabschnitts 23a im Bereich der Umfangsnut 63 verringert. Die beiden Nutflanken 64 dieser Umfangsnut 63 bilden jeweils eine erste Anschlagfläche 32.

Die Hülse 30 ist bei diesem Ausführungsbeispiel hohlzylindrisch ausgeführt. Die Durchgangsfläche 45 des Verbindungskörpers 40 ist entsprechend der Hülsenaußenfläche 33 zylindermantelflächenförmig.

Der verstärkte Bereich 41a des Verbindungsabschnitts 41 mit größerer Dicke kann an der Stelle vergrößert sein, an der der Verbindungsabschnitt 41 die Umfangsnut 63 im Bolzen 23 umschließt. Der verstärkte Bereich 41a kann um einen Betrag dicker sein als der angrenzende hohlzylindrische Verbindungsabschnitt 41, der der Tiefe der Umfangsnut 63 entspricht.

Auf den Verbindungsabschnitt 41 kann analog zu den vorstehend beschriebenen Ausführungsbeispielen eine Umformkraft F einwirken, um den Verbindungsabschnitt 41 plastisch umzuformen, so dass sich dieser radial nach innen gegen die Hülse 30 drückt. Dabei verformt sich die Hülse 30 und wird radial nach innen in die Umfangsnut 63 des Bolzens 23 gedrückt. Durch diese Umformung entstehen an der Hülseninnenfläche erste Gegenanschlagflächen 32, die jeweils an einer zugeordneten ersten Anschlagfläche 26 anliegen, die durch die Nutflanken 64 gebildet sind. Gleichermaßen entsteht im Bereich der Hülsenaußenfläche 33 eine Umfangsvertiefung 65, die an ihren in Längsrichtung R vorhandenen axialen Enden jeweils eine Vertiefungsflanke 67 aufweist, die jeweils eine zweite Anschlagfläche 34 bilden. In diese Umfangsvertiefung 66 ragt ein bei der plastischen Umformung entstandener Radialvorsprung 68 des Verbindungsabschnitts 41 hinein, der dabei an den Vertiefungsflanken 67 anliegt und zu jeder zweiten Anschlagfläche 34 eine jeweils zugeordnete zweite Gegenanschlagfläche 46 bildet.

Bei dem Ausführungsbeispiel gemäß der Figuren 9 und 10 sind die wenigstens eine zweite Anschlagfläche 34 und die wenigstens eine zweite Gegenanschlagfläche 46 durch das plastische Umformen des Verbindungsabschnitts 41 hergestellt. Ebenso wird die wenigstens eine erste Gegenanschlagfläche 32 durch die plastische Umformung des Verbindungsabschnitts 41 hergestellt. Lediglich die wenigstens eine erste Anschlagfläche 26 am Bolzen 23 ist bereits vor der plastischen Umformung des Verbindungsabschnitts 41 vorhanden. Im Übrigen kann auf die vorstehende Beschreibung verwiesen werden.

Die Erfindung betrifft eine explosionsgeschützte Anordnung 22 mit einem elektrisch leitfähigen Bolzen 23 aus einem radial nicht verformbaren starren Material. Der Bolzen 23 ist in einem Zentralabschnitt 23a von einer elektrisch isolierenden Hülse 30 koaxial umschlossen. Die Hülse 30 wird wiederum von einem Verbindungsabschnitt 41 eines Verbindungskörpers 40 koaxial umschlossen. Der Verbindungskörper 40 besteht aus plastisch verformbarem Material. Die Hülse 30 ist elastisch verformbar. Durch plastisches Umformen des Verbindungsabschnitts 41 verringert sich dessen Außenabmessung und er drückt nach innen gegen die Hülse 30, die sich am Bolzen 23 abstützt. Dadurch wird eine kraftschlüssige und optional zusätzlich formschlüssige Verbindung erreicht, die eine Baueinheit aus dem Verbindungskörper 40, der Hülse 30 und dem Bolzen 23 bildet. Bei hergestellter Baueinheit liegt eine sich schräg oder radial zur Längsachse L des Bolzens 23 an dem Bolzen 23 vorhandene erste Anschlagfläche 26 an einer entsprechend zugeordneten ersten Gegenanschlagfläche der Hülse 30 an. Außerdem kann an der Hülse 30 eine zweite Anschlagfläche vorhanden sein, die schräg oder radial zur Längsachse L ausgerichtet ist und an der eine zugeordnete zweite Gegenanschlagfläche 46 des Verbindungskörpers 40 anliegt. Über die Anschlagflächen und Gegenanschlagflächen kann eine Sicherung der Baueinheit gegen unerwünschte Relativbewegungen in Längsrichtung R parallel zur Längsachse L erreicht werden. Die Baueinheit ist zünddurchschlagspaltfrei und kann ohne stoffschlüssige Klebeverbindung einfach und schnell hergestellt werden.

### Bezugszeichenliste:

- 20: Gehäuse
- 21: Wand
- 22: explosionsgeschützte Anordnung
- 23: Bolzen
- 23a: Zentralabschnitt des Bolzens
- 23b: Endabschnitt des Bolzens
- 24: Durchführungsöffnung
- 25: Bolzenumfangsfläche
- 25a: erster Umfangsflächenabschnitt
- 25b: zweiter Umfangsflächenabschnitt
- 25c: dritter Umfangsflächenabschnitt
- 26: erste Anschlagfläche

- 30: Hülse
- 31: Hülseninnenfläche
- 31a: erster Innenflächenabschnitt
- 31b: zweiter Innenflächenabschnitt
- 31c: dritter Innenflächenabschnitt
- 32: erste Gegenanschlagfläche
- 33: Hülsenaußenfläche
- 33a: erster Außenflächenabschnitt
- 33b: zweiter Außenflächenabschnitt
- 33c: dritter Außenflächenabschnitt
- 33d: vierter Außenflächenabschnitt
- 33e: fünfter Außenflächenabschnitt
- 34: zweite Anschlagfläche

- 40: Verbindungskörper
- 41: Verbindungsabschnitt des Verbindungskörpers
- 41a: verstärkter Bereich des Verbindungsabschnitts
- 42: Flanschabschnitt des Verbindungskörpers
- 43: Ringflansch
- 44: Durchgang
- 45: Durchgangsfläche
- 45a: erster Durchgangsflächenabschnitt
- 45b: zweiter Durchgangsflächenabschnitt
- 45c: dritter Durchgangsflächenabschnitt
- 46: zweite Gegenanschlagfläche

- 50: Ringspalt
- 51: Walzwerkzeug
- 52: Abschnittsaußenfläche
- 53: Außengewinde
- 54: erste Begrenzungsfläche
- 55: Durchführungsfläche
- 56: zweite Begrenzungsfläche
- 57: Innengewinde
- 58: Ex-Spalt

- 62: Oberflächenprofilierung
- 63: Umfangsnut
- 64: Nutflanke

- 66: Umfangsvertiefung
- 67: Vertiefungsflanken
- 68: Radialvorsprung

- D: Drehachse
- F: Umformkraft
- L: Längsachse
- R: Längsrichtung

## Patentansprüche

1. Explosionsgeschützte Anordnung (22),
mit einem sich entlang einer Längsachse (L) erstreckenden elektrisch leitfähigen Bolzen (23), der eine sich um die Längsachse (L) herum erstreckende Bolzenumfangsfläche (25) mit mehreren Umfangsflächenabschnitten (25a, 25b, 25c) aufweist, wobei wenigstens einer der Umfangsflächenabschnitte (25c) eine sich schräg oder radial zur Längsachse (L) erstreckende erste Anschlagfläche (26) bildet,
mit einer elektrisch isolierenden Hülse (30), die eine sich um die Längsachse (L) herum erstreckende, an der Bolzenumfangsfläche (25) anliegende Hülseninnenfläche (31) mit mehreren Innenflächenabschnitten (31a, 31b, 31c) aufweist, wobei wenigstens einer der Innenflächenabschnitte (31c) eine sich schräg oder radial zur Längsachse (L) erstreckende erste Gegenanschlagfläche (32) bildet, die an der ersten Anschlagfläche (26) anliegt,
mit einem Verbindungskörper (40), der zumindest einen Längsabschnitt der Hülse (30) umschließt, der aus einem plastisch verformbaren Material besteht und der einen radial nach innen gegen die Hülse (30) drückenden, plastisch verformten Verbindungsabschnitt (41) aufweist, wodurch eine kraftschlüssige Verbindung zwischen dem Verbindungskörper (40) und der Hülse (30) sowie zwischen der Hülse (30) und dem Bolzen (23) gebildet ist.

2. Explosionsgeschützte Anordnung nach Anspruch 1,
**dadurch gekennzeichnet, dass** eine durch eine Durchführungsfläche (55) begrenzte Durchführungsöffnung (24) in einer Wand (21) oder einem Durchführungsteil vorhanden ist, und dass der Verbindungsabschnitt (41) eine plastisch umgeformte Abschnittsaußenfläche (52) aufweist, an der unmittelbar durch das plastischen Umformen oder durch eine weitere Bearbeitung eine erste Begrenzungsfläche (54) gebildet ist, die mit der eine zweite Begrenzungsfläche (56) bildenden Durchführungsfläche (55) einen zünddurchschlagsicheren Ex-Spalt (58) bildet.

3. Explosionsgeschützte Anordnung nach Anspruch 1 oder 2, **dadurch gekennzeichnet, dass** die Hülse (30) aus einem elastisch verformbaren Material besteht.

4. Explosionsgeschützte Anordnung nach einem der vorhergehenden Ansprüche,
**dadurch gekennzeichnet, dass** wenigstens eine erste Gegenanschlagfläche (32) vor dem plastischen Verformen des Verbindungsabschnitts (41) vorhanden ist.

5. Explosionsgeschützte Anordnung nach einem der vorhergehenden Ansprüche,
**dadurch gekennzeichnet, dass** wenigstens eine erste Gegenanschlagfläche (32) durch das plastische Verformen des Verbindungsabschnitts (41) gebildet ist.

6. Explosionsgeschützte Anordnung nach einem der vorhergehenden Ansprüche,
**dadurch gekennzeichnet, dass** die wenigstens eine erste Anschlagfläche (26) an einer Ringstufe des Bolzens (23) vorhanden ist.

7. Explosionsgeschützte Anordnung nach einem der vorhergehenden Ansprüche,
**dadurch gekennzeichnet, dass** die Hülse (30) eine Hülsenaußenfläche (33) aufweist, die an einer Durchgangsfläche (45) eines den Verbindungskörper (40) in Längsrichtung (L) durchsetzenden Durchgangs (44) anliegt.

8. Explosionsgeschützte Anordnung nach Anspruch 7,
**dadurch gekennzeichnet, dass** die Hülsenaußenfläche (33) mehrere Außenflächenabschnitte (33a, 33b, 33c, 33d, 33e) aufweist, wobei wenigstens einer der Außenflächenabschnitte (33d, 33e) eine sich schräg oder radial zur Längsachse (L) erstreckende zweite Anschlagfläche (34) bildet.

9. Explosionsgeschützte Anordnung nach Anspruch 8,
**dadurch gekennzeichnet, dass** die Durchgangsfläche (45) mehrere Durchgangsflächenabschnitte (45a, 45b, 45c) aufweist, wobei wenigstens einer der Durchgangsflächenabschnitte (45c) eine sich schräg oder radial zur Längsachse (L) erstreckende zweite Gegenanschlagfläche (46) bildet, die an der zweiten Anschlagfläche (34) anliegt.

10. Explosionsgeschützte Anordnung nach Anspruch 8 oder 9, **dadurch gekennzeichnet, dass** wenigstens eine zweite Anschlagfläche (34) und/oder wenigstens eine zweite Gegenanschlagfläche (46) vor dem plastischen Verformen des Verbindungsabschnitts (41) vorhanden ist.

11. Explosionsgeschützte Anordnung nach einem der Ansprüche 8 bis 10,
**dadurch gekennzeichnet, dass** wenigstens eine zweite Anschlagfläche (34) und/oder wenigstens eine zweite Gegenanschlagfläche (46) durch das plastische Verformen des Verbindungsabschnitts (41) gebildet ist.

12. Explosionsgeschützte Anordnung nach einem der vorhergehenden Ansprüche,
**dadurch gekennzeichnet, dass** die Hülse (30) eine Hülsenaußenfläche (33) mit einem Außenflächenabschnitt (33a) aufweist, der eine Oberflächenprofilierung (62) aufweist.

13. Explosionsgeschützte Anordnung nach einem der vorhergehenden Ansprüche,
**dadurch gekennzeichnet, dass** der Verbindungskörper (40) in Längsrichtung (L) von einem Durchgang (44) durchsetzt ist, der von einer Durchgangsfläche (45) begrenzt ist, wobei ein Durchgangsflächenabschnitt (45a) der Durchgangsfläche (45) eine Oberflächenprofilierung (62) aufweist.

14. Verfahren zur Herstellung einer explosionsgeschützte Anordnung, mit folgenden Schritten:
- Bereitstellen eines sich in einer Längsrichtung (L) erstreckenden elektrisch leitenden Bolzens (23), der eine sich um die Längsachse (L) herum erstreckende Bolzenumfangsfläche (25) mit mehreren Umfangsflächenabschnitten (25a, 25b, 25c) aufweist, wobei wenigstens einer der Umfangsflächenabschnitte (25c) eine sich schräg oder radial zur Längsachse (L) erstreckende erste Anschlagfläche (26) bildet,
- Bereitstellen einer elektrisch isolierenden Hülse (), die eine sich um die Längsachse (L) herum erstreckende Hülseninnenfläche (31) mit mehreren Innenflächenabschnitten (31a, 31b, 31c) aufweist,
- Bereitstellen eines aus einem plastisch verformbaren Material bestehenden Verbindungskörpers (40), der in Längsrichtung (L) von einem Durchgang (44) durchsetzt wird,
- Einstecken des Bolzens (23) in der Hülse (30) und Aufstecken des Verbindungskörpers (40) auf die Hülse (30),
- plastisches Umformen des Verbindungskörpers (40) in einem Verbindungsabschnitt (41), wodurch sich die Querschnittsfläche der Außenkontur im Verbindungsabschnitt (41) reduziert, wodurch der Verbindungsabschnitt (41) radial nach innen gegen die Hülse (30) drückt und wodurch eine kraftschlüssige Verbindung zwischen dem Verbindungskörper (40) und der Hülse (30) sowie zwischen der Hülse (30) und dem Bolzen (23) hergestellt wird, derart, dass die Bolzenumfangsfläche (25) an der Hülseninnenfläche (31) anliegt, wobei zumindest nach dem plastischen Umformen des Verbindungsabschnitts (41) wenigstens einer der Innenflächenabschnitte (31c) der Hülse (30) eine sich schräg oder radial zur Längsachse (L) erstreckende erste Gegenanschlagfläche (32) bildet, die an der Anschlagfläche (26) des Bolzens (23) anliegt.

15. Verfahren nach Anspruch 14,
**dadurch gekennzeichnet, dass** unmittelbar durch das plastische Umformen oder durch das plastische Umformen und eine weitere Bearbeitung an einer Abschnittsaußenfläche (52) des Verbindungsabschnitts (41) eine erste Begrenzungsfläche (54) gebildet ist und dass der Verbindungskörper (40) mit der Hülse (30) und dem Bolzen (23) in einer in einer Wand (21) oder einem Durchführungsteil vorhandenen Durchführungsöffnung (24), das durch eine Durchführungsfläche (55) begrenzt ist, derart angeordnet wird, dass die erste Begrenzungsfläche (54) mit der eine zweite Begrenzungsfläche (56) bildenden Durchführungsinnenfläche (55) einen zünddurchschlagsicheren Ex-Spalt (58) bildet.

16. Verfahren nach Anspruch 14 oder 15,
**dadurch gekennzeichnet, dass** das plastische Umformen des Verbindungskörpers (40) durch Walzen des Verbindungskörpers (40) zwischen zwei Walzwerkzeugen (51) erfolgt.

## Claims

1. Explosion-proof arrangement (22),
with an electrically conductive bolt (23) which extends along a longitudinal axis (L) and has a bolt circumferential face (25) with several circumferential face portions (25a, 25b, 25c) extending around the longitudinal axis (L), wherein at least one of the circumferential surface portions (25c) forms a first stop face (26) extending obliquely or radially to the longitudinal axis (L),
with an electrically insulating sleeve (30) which has a sleeve inner face (31) with several inner face portions (31a, 31b, 31c) bearing on the bolt circumferential face (25) and extending around the longitudinal axis (L), wherein at least one of these inner face portions (31c) forms a first counter-stop face (32) extending obliquely or radially to the longitudinal axis (L) and bearing on the first stop face (26),
with a connecting body (40) which surrounds at least a longitudinal portion of the sleeve (30), is made of a plastically deformable material and has a plastically deformed connecting portion (41) which presses radially inward against the sleeve (30), whereby a force-fit connection is formed between the connecting body (40) and the sleeve (30) and between the sleeve (30) and the bolt (23).

2. Explosion-proof arrangement according to claim 1,
**characterised in that** a leadthrough opening (24) delimited by a leadthrough face (55) is present in a wall (21) or a leadthrough part, and the connecting portion (41) has a plastically deformed portion outer face (52) on which a first delimiting face (54) is formed directly by the plastic deformation or by a further processing and, together with the leadthrough face (55) forming a second delimiting face (56), forms a flame-proof, explosion-proof gap (58).

3. Explosion-proof arrangement according to claim 1 or 2,
**characterised in that** the sleeve (30) is made from an elastically deformable material.

4. Explosion-proof arrangement according to any of the preceding claims, **characterised in that** at least one first counter-stop face (32) is present before the plastic deformation of the connecting portion (41).

5. Explosion-proof arrangement according to any of the preceding claims, **characterised in that** at least one first counter-stop face (32) is formed by the plastic deformation of the connecting portion (41).

6. Explosion-proof arrangement according to any of the preceding claims, **characterised in that** the at least one first stop face (26) is present on an annular step of the bolt (23).

7. Explosion-proof arrangement according to any of the preceding claims, **characterised in that** the sleeve (30) has a sleeve outer face (33) which bears on a passage face (45) of a passage (44) passing through the connecting body (40) in the longitudinal direction (L).

8. Explosion-proof arrangement according to claim 7,
**characterised in that** the sleeve outer face (33) has several outer face portions (33a, 33b, 33c, 33d, 33e), wherein at least one of the outer face portions (33d, 33e) forms a second stop face (34) extending obliquely or radially to the longitudinal axis (L).

9. Explosion-proof arrangement according to claim 8,
**characterised in that** the passage face (45) has several passage face portions (45a, 45b, 45c), wherein at least one of the passage face portions (45c) forms a second counter-stop face (46) which extends obliquely or radially to the longitudinal axis (L) and bears on the second stop face (34).

10. Explosion-proof arrangement according to claim 8 or 9,
**characterised in that** at least one second stop face (34) and/or at least one second counter-stop face (46) is present before the plastic deformation of the connecting portion (41).

11. Explosion-proof arrangement according to any of claims 8 to 10,
**characterised in that** at least one second stop face (34) and/or at least one second counter-stop face (46) is formed by the plastic deformation of the connecting portion (41).

12. Explosion-proof arrangement according to any of the preceding claims, **characterised in that** the sleeve (30) has a sleeve outer face (33) with an outer face portion (33a) having a surface profiling (62).

13. Explosion-proof arrangement according to any of the preceding claims, **characterised in that** the a passage (44) delimited by a passage face (45) passes through the connecting body (40) in the longitudinal direction (L), wherein a passage face portion (45a) of the passage face (45) has a surface profiling (62).

14. Method for production of an explosion-proof arrangement, with the following steps:
- provision of an electrically conductive bolt (23) which extends in a longitudinal direction (L) and has a bolt circumferential face (25) with several circumferential face portions (25a, 25b, 25c) extending around the longitudinal axis (L), wherein at least one of the circumferential surface portions (25c) forms a first stop face (26) extending obliquely or radially to the longitudinal axis (L),
- provision of an electrically insulating sleeve (30) which has a sleeve inner face (31) with several inner face portions (31a, 31b, 31c) extending around the longitudinal axis (L),
- provision of a connecting body (40) which is made of a plastically deformable material and through which a passage (44) passes in the longitudinal direction (L),
- insertion of the bolt (23) in the sleeve (30) and application of the connecting body (40) onto the sleeve (30),
- plastic deformation of the connecting body (40) in a connecting portion (41), whereby the cross-sectional area of the outer contour in the connecting portion (41) is reduced, whereby the connecting portion (41) presses radially inward against the sleeve (30), and whereby a force-fit connection is created between the connecting body (40) and the sleeve (30) and between the sleeve (30) and the bolt (23), such that the bolt circumferential face (25) bears on the sleeve inner face (31), wherein at least after plastic deformation of the connecting portion (41), at least one of the inner face portions (31c) of the sleeve (30) forms a first counter-stop face (32) which extends obliquely or radially to the longitudinal axis (L) and on which the stop face (26) of the bolt (23) bears.

15. Method according to claim 14,
**characterised in that** a first delimiting face (54) is formed on a portion outer face (52) of the connecting portion (41) directly by the plastic deformation or by the plastic deformation and a further processing, and the connecting body (40) together with the sleeve (30) and the bolt (23) is arranged in a leadthrough opening (24) present in a wall (21) or a leadthrough part and delimited by a leadthrough face (55) such that the first delimiting face (54), together with the leadthrough inner face (55) forming a second delimiting face (56), forms a flame-proof, explosion-proof gap (58).

16. Method according to claim 14 or 15,
**characterised in that** the plastic deformation of the connecting body (40) is achieved by rolling the connecting body (40) between two roller tools (51).'

## Revendications

1. Dispositif antidéflagrant (22),
comprenant une tige (23) électriquement conductrice qui s'étend le long d'un axe longitudinal (L) et présente une surface périphérique de tige (25) s'étendant autour de l'axe longitudinal (L) et comportant plusieurs portions de surface périphérique (25a, 25b, 25c), au moins une des portions de surface périphérique (25c) formant une première surface de butée (26) qui s'étend en biais ou radialement par rapport à l'axe longitudinal (L),
comprenant un manchon (30) électriquement isolant, lequel présente une surface interne de manchon (31) qui s'étend autour de l'axe longitudinal (L), est appliquée contre la surface périphérique de tige (25) et comporte plusieurs portions de surface interne (31a, 31b, 31c), au moins une des portions de surface interne (31c) formant une première surface de butée antagoniste (32) qui s'étend en biais ou radialement par rapport à l'axe longitudinal (L) et est appliquée contre la première surface de butée (26),
comprenant un corps d'assemblage (40) qui entoure au moins une portion longitudinale du manchon (30), est constitué d'un matériau plastiquement déformable et présente une portion d'assemblage (41) déformée plastiquement et poussant radialement vers l'intérieur contre le manchon (30), ce qui a pour effet de créer une liaison par adhérence entre le corps d'assemblage (40) et le manchon (30) et entre le manchon (30) et la tige (23).

2. Dispositif antidéflagrant selon la revendication 1, **caractérisé en ce qu'**une ouverture de traversée (24), délimitée par une surface de traversée (55), est prévue dans une paroi (21) ou une pièce de traversée, et **en ce que** la portion d'assemblage (41) présente une surface extérieure de portion (52) plastiquement déformée, sur laquelle est réalisée, directement par la déformation plastique ou par un traitement supplémentaire, une première surface de délimitation (54) qui forme un joint antidéflagrant (58) résistant au claquage avec la surface de traversée (55) constituant une deuxième surface de délimitation (56).

3. Dispositif antidéflagrant selon la revendication 1 ou 2, **caractérisé en ce que** le manchon (30) est constitué d'un matériau élastiquement déformable.

4. Dispositif antidéflagrant selon l'une des revendications précédentes, **caractérisé en ce qu'**il existe au moins une première surface de butée antagoniste (32), avant la déformation plastique de la portion d'assemblage (41).

5. Dispositif antidéflagrant selon l'une des revendications précédentes, **caractérisé en ce qu'**au moins une première surface de butée antagoniste (32) est formée par la déformation plastique de la portion d'assemblage (41).

6. Dispositif antidéflagrant selon l'une des revendications précédentes, **caractérisé en ce que** la première surface de butée (26), au nombre d'au moins une, est prévue sur un gradin annulaire de la tige (23).

7. Dispositif antidéflagrant selon l'une des revendications précédentes, **caractérisé en ce que** le manchon (30) présente une surface extérieure de manchon (33) qui est appliquée contre une surface de passage (45) d'un passage (44) traversant le corps d'assemblage (40) dans la direction longitudinale (L).

8. Dispositif antidéflagrant selon la revendication 7, **caractérisé en ce que** la surface extérieure de manchon (33) présente plusieurs portions de surface extérieure (33a, 33b, 33c, 33d, 33e), au moins une des portions de surface extérieure (33d, 33e) formant une deuxième surface de butée (34) qui s'étend en biais ou radialement par rapport à l'axe longitudinal (L).

9. Dispositif antidéflagrant selon la revendication 8, **caractérisé en ce que** la surface de passage (45) présente plusieurs portions de surface de passage (45a, 45b, 45c), au moins une des portions de surface de passage (45c) formant une deuxième surface de butée antagoniste (46) qui s'étend en biais ou radialement par rapport à l'axe longitudinal (L) et est appliquée contre la deuxième surface de butée (34).

10. Dispositif antidéflagrant selon la revendication 8 ou 9, **caractérisé en ce qu'**il est prévu au moins une deuxième surface de butée (34) et/ou au moins une deuxième surface de butée antagoniste (46), avant la déformation plastique de la portion d'assemblage (41).

11. Dispositif antidéflagrant selon l'une des revendications 8 à 10, **caractérisé en ce qu'**au moins une deuxième surface de butée (34) et/ou au moins une deuxième surface de butée antagoniste (46) est obtenue par la déformation plastique de la portion d'assemblage (41).

12. Dispositif antidéflagrant selon l'une des revendications précédentes, **caractérisé en ce que** le manchon (30) a une surface extérieure de manchon (33) qui est dotée d'une portion de surface extérieure (33a) présentant un profilage de surface (62).

13. Dispositif antidéflagrant selon l'une des revendications précédentes, **caractérisé en ce que** le corps d'assemblage (40) est traversé, dans la direction longitudinale (L), par un passage (44) qui est délimité par une surface de passage (45), une portion de surface de passage (45a) de la surface de passage (45) présentant un profilage de surface (62).

14. Procédé de fabrication d'un dispositif antidéflagrant, comprenant les étapes suivantes :
- préparation d'une tige (23) électriquement conductrice qui s'étend dans une direction longitudinale (L) et présente une surface périphérique de tige (25) s'étendant autour de l'axe longitudinal (L) et comportant plusieurs portions de surface périphérique (25a, 25b, 25c), au moins une des portions de surface périphérique (25c) formant une première surface de butée (26) qui s'étend en biais ou radialement par rapport à l'axe longitudinal (L),
- préparation d'un manchon () électriquement isolant, présentant une surface interne de manchon (31) qui s'étend autour de l'axe longitudinal (L) et comporte plusieurs portions de surface interne (31a, 31b, 31c),
- préparation d'un corps d'assemblage (40) qui est constitué d'un matériau plastiquement déformable et est traversé par un passage (44) dans la direction longitudinale (L),
- insertion de la tige (23) dans le manchon (30), et emboîtement du corps d'assemblage (40) sur le manchon (30),
- déformation plastique du corps d'assemblage (40) dans une portion d'assemblage (41), ce qui a pour effet de réduire la surface de section transversale du contour extérieur dans la portion d'assemblage (41), à la suite de quoi la portion d'assemblage (41) pousse radialement vers l'intérieur, contre le manchon (30), et à la suite de quoi une liaison par adhérence est établie entre le corps d'assemblage (40) et le manchon (30) et entre le manchon (30) et la tige (23), de telle sorte que la surface périphérique de tige (25) est appliquée contre la surface interne de manchon (31), sachant qu'au moins après la déformation plastique de la portion d'assemblage (41), au moins une des portions de surface interne (31c) du manchon (30) forme une première surface de butée antagoniste (32) qui s'étend en biais ou radialement par rapport à l'axe longitudinal (L) et est appliquée contre la surface de butée (26) de la tige (23).

15. Procédé selon la revendication 14, **caractérisé en ce que** la déformation plastique ou la déformation plastique et un traitement supplémentaire réalisés sur une surface de portion extérieure (52) de la portion d'assemblage (41) ont directement pour effet de créer une première surface de délimitation (54), et **en ce que** le corps d'assemblage (40) est disposé, conjointement avec le manchon (30) et la tige (23), dans une ouverture de traversée (24) qui est prévue dans une paroi (21) ou dans une pièce de traversée et est délimitée par une surface de traversée (55), de telle sorte que la première surface de délimitation (54) forme un joint antidéflagrant (58) résistant au claquage avec la surface interne de traversée (55) qui constitue une deuxième surface de délimitation (56).

16. Procédé selon la revendication 14 ou 15, **caractérisé en ce que** la déformation plastique du corps d'assemblage (40) est réalisée par laminage du corps d'assemblage (40) entre deux outils de laminage (51).
